(19) Europäisches Patentamt
European Patent Office
Office européen des brevets

(11) Publication number: **0 114 875 B1**

# (12) EUROPEAN PATENT SPECIFICATION

(45) Date of publication of patent specification: 02.11.89

(51) Int. Cl.$^4$: C 08 G 12/08, C 08 G 14/06

(21) Application number: 83902559.0

(22) Date of filing: 18.07.83

(86) International application number: PCT/US83/01086

(87) International publication number: WO 84/00551 16.02.84 Gazette 84/05

## (54) METHOD FOR MAKING PHENOL-FORMALDEHYDE-POLYAMINE CURING AGENTS FOR EPOXY RESINS.

(30) Priority: 26.07.82 US 401547

(43) Date of publication of application: 08.08.84 Bulletin 84/32

(45) Publication of the grant of the patent: 02.11.89 Bulletin 89/44

(84) Designated Contracting States: AT BE CH DE FR GB LI LU NL SE

(56) References cited:
EP-A-0 066 447
PATENTS ABSTRACTS OF JAPAN, vol. 4, no. 73, May 28, 1980, page 53C12, & JP - A - 55 38 836 (SANYO KASEI KOGYO K.K.)(18-03-1980).
CHEMICAL ABSTRACTS, vol. 90, no. 14, April 1979, page 38, abstract 104870h, COLUMBUS, OHIO (US), & CZ - A - 175 119 (I. WIESNER)(15-11-1978).
PATENTS ABSTRACTS OF JAPAN, vol. 4, no. 73 (C-12)(555), May 28, 1980, page 63C12, & JP - A - 55 38 873 (SANYO KASEI KOGYO K.K.)(18-03-1980).

(73) Proprietor: CUMMINGS, Lowell O.
133 Crane Drive
San Anselmo, CA 94960 (US)

(72) Inventor: CUMMINGS, Lowell O.
133 Crane Drive
San Anselmo, CA 94960 (US)

(74) Representative: Casalonga, Axel et al
BUREAU D.A. CASALONGA - JOSSE
Morassistrasse 8
D-8000 München 5 (DE)

(56) References cited:
CHEMICAL ABSTRACTS, vol. 97, no. 2, July 12, 1982, page 47, abstract 7373k, COLUMBUS, OHIO (US), & CZ - A - 191 121 (B. SVOBODA et al.)(29-05-1981).

EP 0 114 875 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an improved method for making phenol-formaldehyde-polyamines suitable for use as curing agents for epoxy resins. The invention especially relates to a method for making a curing agent suited for curing epoxy resins under water or on a wet surface. This method comprises the steps of mixing a major amount by weight of a propylene diamine with a minor amount by weight of a polyamine, mixing the resulting mixture with a phenol and then reacting the reaction product with formaldehyde to give said curing agent.

Such method may be known already from US—A—3 734 965 which relates to phenolic resins having a polyoxypropyleneamine substituent and which is particularly concerned with substituted phenols formed by condensing polyoxypropyleneamine with phenol and formaldehyde. It is mentioned in said US-Patent that those new substituted phenols may be employed as curing agents for epoxy resins and that curing may even be possible at high atmospheric humidity and in many cases even under water. It is however not disclosed in which cases under water curing is possible and in which cases not.

Phenol-formaldehyde-polyamines are epoxy curing agents that have properties superior to those of most polyamine epoxy curing agents, particularly their ability to cure epoxy resins to tougher, more chemically resistant films and castings.

Presently these curing agents are manufactured in two distinct steps: (1) reacting phenol with formalin (a water solution of formaldehyde) to produce a phenol formaldehyde resin, methylol phenol, and then (2) reacting this resin with any of a number of polyamines to produce the phenol-formaldehyde-polyamine compound.

I have made a discovery which greatly improves the manufacture of these phenol-formaldehyde-polyamine compounds, simplifying the manufacturing step and broadening the scope of their composition and application. Consequently, the present invention relates to a method as mentioned hereinbefore which is characterized in that

(a) the propylene diamine is chosen from tallow propylene diamines or tridecylether propylene diamines,

(b) the polyamine is chosen from hexamethylene diamine, hexamethylene triamine, diethylene triamine, triethylene tetramine,

(c) the phenol is nonylphenol,

(d) the formaldehyde is used in the form of dry powdered paraformaldehyde,

(e) the curing agent obtained is water-insoluble.

Preferably, said reacting steps are followed by removal of any residual contained water.

In the present invention, the phenol and the mixture of diamine and polyamine are first mixed together. The phenol and di- plus polyamine react together when mixed, forming a salt or complex. This salt or complex is then reacted with formaldehyde and the formaldehyde combines with both the amines and the phenol at the same time, forming a polymer of the amines linked to the phenol by formaldehyde.

The incorporation of phenol or similar compounds with the di- plus polyamines enables the formaldehyde to react smoothly to give transparent, low viscosity liquids which are excellent polyamine epoxy curing agents.

In contrast, it should be noted that if the attempt were made to react formaldehyde with polyamines alone, a very vigorous exotherm would take place and an unusable, high-polymer gel would likely result.

To illustrate the propensity of the reaction of polyamine and formaldehyde to give high exotherms and unusable high polymer gels, the following reactions are shown:

To 206 g (two moles or six equivalents) of diethylene triamine

$$H_2NCH_2CH_2NHCH_2CH_2NH_2$$

in a glass reaction flask stirred with a paddle stirrer was added 66 g (two moles, two equivalents) of 91% paraformaldehyde. The temperature rose from 20°C to 140°C in about one minute, while violent boiling and refluxing took place. The color changed from light yellow to red and considerable amount of dark brown, hard infusible gel formed.

As a second example, a 70% solution of hexamethylene diamine in water was stirred at room temperature while 37% formalin was added. A white insoluble precipitate or gel formed at once throughout the whole mass, and the mass became quite warm. This white precipitate was insoluble in many strong solvents and reagents, including epoxy resins.

This same type of hexamethylene diamine formaldehyde precipitate or gel is described in the book: *Formaldehyde* by J. Frederick Walker, third edition, Robert E. Krieger Publishing Co., page 364, where this same reaction is described "giving a colorless, voluminous, elastic product which is insoluble in water and organic compounds".

In contrast, as shown in the examples below of the present invention, both diethylene triamine and hexamethylene diamine (and many other polyamines) react smoothly with formaldehyde when they are first mixed with a phenol, such as nonyl phenol.

Materials which have been tried include:

Polyamines:
- diethylene triamine
- triethylene tetramine
- hexamethylene diamine
- hexamethylene triamine
- tridecylether propylene diamine
- tallow propylene diamine.

Phenols:
- nonyl phenol.

As is shown in the examples below, nonyl phenol is a particularly good phenol to use in this reaction. Nonyl phenol, a commodity widely used in many industries, is used to advantage in making water-insoluble polyamine curing agents because nonyl phenol itself is water insoluble. Certain nonyl phenol-polyamine-formaldehyde compositions are excellent epoxy curing agents that enable the epoxy resin and nonyl phenol-polyamine-formaldehyde combination to be coated under water or on wet and damp surfaces.

A rather surprising aspect of the addition of formaldehyde to the phenol-polyamine mix (and the phenol-like compounds-polyamine mix) is that the viscosity of the curing agent can be varied over a wide range merely by varying the amount of formaldehyde. As the amount of formaldehyde is a small portion of the total curing agent, the variation of the amount of formaldehyde does not greatly alter the total composition. This means that, for example, a change in formaldehyde content from 5% to 10% can change the viscosity from 100 mPa · s to 8000 mPa · s (one poise to eighty poises) and so affords a very convenient way of obtaining a desired viscosity.

Formalin and paraformaldehyde are equally suitable for the chemical reaction with the phenol-polyamine combination. However, paraformaldehyde is preferred from the manufacturing aspect because it is a solid form of formaldehyde and does not introduce large amounts of water, as does formalin. The use of paraformaldehyde with the phenol-polyamine combination also results in a very short reaction time in the reaction kettle.

Description of some preferred embodiments

A typical procedure according to the present invention is to charge the phenol and polyamine into a kettle at room temperature. When these chemicals are mixed, a salt or complex forms raising the temperature several degrees. Then paraformaldehyde is added, and the temperature is raised to about 75°C. At this temperature the paraformaldehyde begins to dissolve and heating is discontinued, a mild exotherm raising the temperature to about 100°C. The exotherm soon subsides leaving a transparent liquid containing the water of reaction from the chemical combination of the paraformaldehyde with both the polyamine and the phenol.

Then the water of reaction is driven off, for example, by heating to 120°C, sparging with nitrogen or applying a vacuum or a combination of sparging and application of vacuum. Once the water of reaction is removed the reaction is complete. Typical reaction times are two to four hours.

The following examples illustrate the invention.

The manufacturing process was as follows:

A glass reaction flask was fitted with a stainless steel paddle stirrer, thermometer and distillation apparatus which can be used to distill at atmospheric pressure or under vacuum. The polyamine diamine mixture and phenol are added to the flask and are stirred a short time at room temperature until an exotherm takes place. Stirring is continued, and heat is applied. Paraformaldehyde (or formalin, if desired) is then added, and stirring and heating are continued until the temperature is about 75°C. The heating is then discontinued, while a mild exotherm takes place and the paraformaldehyde dissolves. Heat is again applied to distill off the added water (if any) and the water of reaction. Vacuum is also used to speed removal of water.

A gel time test is preferably made to evaluate the curing properties. This may be done by mixing the completed curing agent with 50 g of liquid epoxy resin of the bisphenol diglycidyl ether type with an equivalent weight per epoxy (WPE) of about 190. The amount of curing agent used with the 50 g epoxy resin varied from 15 g with the high-amino-content curing agents to 50 g with those curing agents intended for use underwater. These were only approximately stoichiometric. To find the optimum properties of any one mixture of curing agent and epoxy resin, several variations from the starting ratio should be made. All examples below passed this test.

TABLE

| Example No. | Amine | | Phenol or aromatic ring compounds similar to phenol | Paraformaldehyde (PF) etc. | Yield | Viscosity at 25°C (poises) ×100 mPa·s | Appearance |
|---|---|---|---|---|---|---|---|
| 1 | tallow<br>propylene<br>diamine<br>Adogen® 570S<br>(Sherex)<br>$C_{18}H_{35}-NH(CH_2)_3NH_2$<br>400 g.<br>1.25 moles | 70% hexa-<br>methylene<br>diamine<br>in water<br>415 g.<br>(290 g. 100%)<br>2.5 mole | nonyl<br>phenol<br>550 g.<br>2.5 moles | 99 g.<br>91% PF<br>(90 g. 100% $CH_2O$)<br>3 moles | 1271 g. | 2.8 | light yellow transparent liquid |
| 2 | tallow<br>propylene<br>diamine<br>Adogen® 570S<br>(Sherex)<br>$C_{18}H_{35}-NH(CH_2)_3NH_2$<br>400 g.<br>1.25 moles | 70% hexa-<br>methylene<br>diamine<br>in water<br>415 g.<br>(290 g. 100%)<br>2.5 moles | nonyl<br>phenol<br>550 g.<br>2.5 moles | 141 g.<br>91% PF<br>(128 g. 100% $CH_2O$)<br>4.25 moles | — | 14.8 | light yellow transparent liquid |
| 3. | tallow<br>propylene<br>diamine<br>Adogen® 570S<br>(Sherex)<br>$C_{18}H_{35}-NH(CH_2)_3NH_2$<br>400 g.<br>1.25 moles | 70% hexa-<br>methylene<br>diamine<br>in water<br>415 g.<br>(290 g. 100%)<br>2.5 moles | nonyl<br>phenol<br>550 g.<br>2.5 moles | 180 g.<br>91% PF<br>(164 g. 100% $CH_2O$)<br>5.46 moles | 1302 g. | 62 | light yellow transparent liquid |

TABLE (Cont.)

| Example No. | Amine | | Phenol or aromatic ring compounds similar to phenol | Paraformaldehyde-hyde (PF) etc. | Yield | Viscosity at 25°C. (poises) ×100 mPa · s | Appearance |
|---|---|---|---|---|---|---|---|
| 4 | tallow<br>propylene<br>diamine<br>Adogen® 570S<br>(Sherex)<br>$C_{18}H_{35}—\overset{H}{\overset{\vert}{N}}(CH_2)_3NH_2$<br>188 g.<br>0.56 moles | 70% hexa-<br>methylene<br>diamine<br>in water<br>90 g.<br>(62.5 g. 100%)<br>0.53 moles | nonyl<br>phenol<br>250 g.<br>1.14 moles | 25.6<br>91% PF<br>(22.75<br>100% $CH_2O$)<br>0.75 moles | 512 g. | 4.6 | light yellow<br>transparent liquid |
| 5 | tridecyl<br>ether propylene<br>diamine<br>160 g.<br>0.5 moles | 70% hexa-<br>methylene<br>diamine<br>in water<br>83 g.<br>(58 g. 100%)<br>0.5 moles | nonyl<br>phenol<br>143 g.<br>0.66 moles | 22 g.<br>91% PF<br>(20 g.<br>100% $CH_2O$)<br>0.66 mole | 366 g. | 1.6 | light yellow<br>transparent liquid |
| 6. | tallow<br>propylene<br>diamine<br>160 g.<br>0.5 mole | hexamethylene<br>triamine*<br>80 g.<br>0.5 mole | nonyl<br>phenol<br>143 g.<br>0.66 mole | 33 g.<br>91% PF<br>(30 g.<br>100% $CH_2O$)<br>1 mole | 396 g. | 19 | dark tan-brown<br>transparent liquid |

Adogen: registered trademark of Sherex Chemical Company

* Hexamethylene triamine (see Example 6) is a by-product of hexamethylene diamine manufacture. It is a dark liquid with the following composition:

| | |
|---|---|
| Bis-hexamethylenetriamine (BHMT) | 20—30% |
| C-10 diamines | 15—25% |
| lower amines and nitriles | 5—10% |
| high boilers (relative to BHMT) | 40—60% |

All examples passed a test for evaluating the ability of an amino-epoxy mix to be coated under water and also, therefore, its ability to coat wet and damp surfaces. This test was as follows:

Fifty grams of a liquid epoxy resin (WPE 190) is mixed with 50 g of the amine curing agent. After thorough mixing, the container and mixed epoxy-amine are placed underwater. A test panel, for example a steel panel, is also underwater. A portion of the epoxy-amine mix is removed from the container by a spatula or similar object, and the mix is spread onto the panel underwater to make a film on it. The test is passed if the film adheres well and does not pull away from the panel.

So, the invention also relates to a method for obtaining a cured epoxy resin coating; comprising following the last step of Claim 1 with the steps of mixing the curing agent with uncured epoxy resin and then applying the resultant mixture to a substrate and curing it thereon by leaving it there for the cure time.

The invention further relates to a method for curing an epoxy resin which is workable not only on dry substrates but also on a moist substrate or one which may be underwater, by mixing said epoxy resin with the epoxy resin curing agent resulting from the method as defined in any one of Claims 1 to 4, coating said mixture on said substrate and to have reacted the epoxy resin and the curing agent.

**Claims**

1. A method for making a curing agent suited for curing epoxy resins under water or on a wet surface; comprising the steps of:

mixing a major amount by weight of a propylene diamine with a minor amount by weight of a polyamine, mixing the resulting mixture with a phenol and then, reacting the reaction product with formaldehyde to give said curing agent, charcterized in that

(a) the propylene diamine is chosen from tallow propylene diamines or tridecylether propylene diamines.

(b) the polyamine is chosen from hexamethylene diamine, hexamethylene triamine, diethylene triamine, triethylene tetramine.

(c) the phenol is nonylphenol.

(d) the formaldehyde is used in the form of dry powdered paraformaldehyde.

(e) the curing agent obtained is water-insoluble.

2. The method of Claim 1 wherein said reacting steps are followed by removal of any residual contained water.

3. The method of Claim 1 or 2, wherein said propylene diamine is tridecylether propylene diamine.

4. A method of Claim 1 or 2, wherein said propylene diamine is tallow propylene diamine.

5. A method for obtaining a cured epoxy resin coating: comprising following the last step of Claim 1 with the steps of mixing the curing agent with uncured epoxy resin and then applying the resultant mixture to a substrate and curing it thereon by leaving it there for the cure time.

6. A method for curing an epoxy resin which is workable not only on dry substrates but also on a moist substrate or one which may be underwater, by mixing said epoxy resin with the epoxy resin curing agent resulting from the method as defined in any one of Claims 1 to 4, coating said mixture on said substrate and to have reacted the epoxy resin and the curing agent.

**Patentansprüche**

1. Verfahren zur Herstellung eines zur Härtung von Epoxyharzen unter Wasser oder auf einer feuchten Oberfläche geeigneten Härtungsmittels, das folgende Stufen umfaßt:

Mischen einer größeren Gewichtsmenge eines Propylendiamins mit einer geringeren Gewichtsmenge eines Polyamins, Versetzen der entstehenden Mischung mit einem Phenol und dann Umsetzung des Reaktionsprodukts mit Formaldehyd zur Herstellung des Härtungsmittels, dadurch gekennzeichnet, daß

(a) das Propylendiamin aus Talg-Propylendiamine oder Tridecylether Propylendiaminen ausgewählt wird;

(b) das Polyamin aus Hexamethylendiamin, Hexamethylentriamine, Diethylentriamin, Triethylentetramin ausgewählt wird;

(c) das Phenol Nonylphenol ist;

(d) der Formaldehyd in Form von trockenem pulverigen Paraformaldehyd eingesetzt wird;

(e) das erhaltene Härtungsmittel wasserunlöslich ist.

2. Verfahren nach Anspruch 1, bei welchem an diese Reaktionsschritte die Abtrennung jeglichen enthaltenen Restwassers angeschlossen wird.

3. Verfahren nach Anspruch 1 oder 2, wobei das Propylendiamin Tridecylether-Propylendiamin ist.

4. Verfahren nach Anspruch 1 oder 2, wobei das Propylendiamin Talg-Propylendiamin ist.

5. Verfahren zur Gewinnung eines gehärteten Epoxyharzüberzugs, bei welchem in Anschluß an die letzte Stufe von Anspruch 1 die Stufen der Mischung des Härtungsmittels mit ungehärtetem Epoxyharz und die Aufbringung der entstehenden Mischung auf ein Substrat sowie die Härtung desselben durch Aushärtenlassen während der Härtungszeit vorgenommen werden.

6. Verfahren zur Härtung eines Epoxyharzes, welches nicht nur auf trockenen Substraten, sondern auch auf einem feuchten Substrat oder einem unter Wasser befindlichen Substrat durchführbar ist, wobei dieses

Epoxyharz mit dem Epoxyharz-Härtungsmittel gemischt wird, das nach dem Verfahren nach irgendeinem der Ansprüche 1 bis 4 hergestellt wurde, diese Mischung auf das Substrat aufgebracht und das Epoxyharz mit dem Härtungsmittel reagieren gelassen wird.

**Revendications**

1. Un procédé pour péparer un agent de polymérisation convenant à la polymérisation de résines époxydes sous l'eau ou sur une surface humide, comprenant les étapes de: mélange d'une quantité pondérale majeure d'une propylènediamine avec une quantité pondérale mineure d'une polyamine, mélange de la mixture obtenue avec un phénol, puis réaction du produit résultant avec le formaldéhyde pour donner ledit agent de polymérisation, caractérisé en ce que:

(a) la propylène-diamine est choisie parmi les propylène-diamines de suif ou tridécylether-propylène-diamines.

(b) la polyamine est choisie parmi hexaméthylène-diamine, hexaméthylène-triamine, diéthylène-triamine, triéthylène-tétramine.

(c) le phénol est le nonylphénol.

(d) le formaldéhyde est utilisé sous la forme de poudre sèche de paraformaldéhyde.

(e) l'agent de polymérisation obtenu est insoluble dans l'eau.

2. Le procédé de la revendication 1, dans lequel lesdites étapes réactionnelles sont suivies de l'évacuation de toute l'eau résiduelle incluse.

3. Le procédé de la revendication 1 ou 2, dans lequel ladite propylène-diamine est la tridécylether-propylène-diamine.

4. Le procédé de la revendication 1 ou 2, dans lequel ladite propylène-diamine est la propylène-diamine de suif.

5. Un procédé pour obtenir un revêtement polymérisé de résine époxyde comprenant, à la suite de la dernière étape de la revendication 1, les étapes de mélange de l'agent de polymérisation avec une résine époxyde non polymérisée, puis application du mélange obtenu sur un support où il se polymérise lorsqu'on l'y maintient le temps nécessaire.

6. Un procédé pour polymériser une résine époxyde qui puisse être façonnée non seulement sur des supports secs mais aussi sur un support humide, ou sur un support qui puisse être situé sous l'eau, en mélangeant ladite résine époxyde avec l'agent de polymérisation de résine époxyde obtenu par le procédé défini dans l'une quelconque des revendications 1, 2, 3, 4, en enduisant ledit support avec ledit mélange et en faisant réagir la résine époxyde et l'agent de polymérisation.